# EUROPEAN PATENT SPECIFICATION

(11) **EP 2 986 754 B1**
(45) Date of publication and mention of the grant of the patent: **22.03.2017**
(21) Application number: 14722968.6
(22) Date of filing: 15.04.2014
(51) Int. Cl.: C09K 3/16, C23C 18/12

(54) **NANOSILICA/CLAY COMPOSITIONS AND COATED ARTICLES, AND METHODS OF MAKING THE SAME**
NANOSILICA/TON ZUSAMMENSETZUNG, BESCHICHTETE ARTIKEL UND VERFAHREN ZUR HERSTELLUNG
COMPOSITIONS DE NANOSILICE/ARGILE ET ARTICLES REVÊTUS, ET PROCÉDÉS DE FABRICATION DE CELLES-CI

(30) Priority: 18.04.2013 US 201361813379 P
(43) Date of publication of application: 24.02.2016
(73) Proprietor: 3M Innovative Properties Company, St. Paul, MN 55133-3427 (US)
(72) Inventor: SCHMIDT, Daniel J., Saint Paul, Minnesota 55133-3427 (US); MEULER, Adam J., Saint Paul, Minnesota 55133-3427 (US); JING, Naiyong, Saint Paul, Minnesota 55133-3427 (US)
(74) Representative: Herzog, Fiesser & Partner Patentanwälte PartG mbB
(86) International application number: PCT/US2014/034122
(87) International publication number: WO 2014/172332

(56) References cited:
- WO-A1-2005/042041
- KAMAL MOHAMED SEENI MEERA ET AL: "Solgel network silica/modified montmorillonite clay hybrid nanocomposites for hydrophobic surface coatings", COLLOIDS AND SURFACES. B, BIOINTERFACES, ELSEVIER, AMSTERDAM, NL, vol. 90, 12 October 2011 (2011-10-12), pages 204-210, XP028125066, ISSN: 0927-7765, DOI: 10.1016/J.COLSURFB.2011.10.018 [retrieved on 2011-10-18]
- WUGUO BI ET AL: "In situ synthesis of silica gel nanowire/Na+-montmorillonite nanocomposites by the sol-gel route", NANOTECHNOLOGY, IOP, BRISTOL, GB, vol. 18, no. 11, 21 March 2007 (2007-03-21), page 115620, XP020118902, ISSN: 0957-4484, DOI: 10.1088/0957-4484/18/11/115620

## Description

### TECHNICAL FIELD

The present disclosure broadly relates to silica nanoparticle compositions that include a clay material, and more particularly to compositions including an amorphous silica network that includes silica nanoparticles and clay particles dispersed in the amorphous silica network, and to articles having an outermost layer including the amorphous silica network that includes silica nanoparticles and clay particles dispersed in the amorphous silica network.

### BACKGROUND

Dissipation of static electrical charge is important in many fields of endeavor, where it is desirable to prevent electrical surges/sparks resulting in damage to electrical components, or accidental ignition of volatile flammable vapors. Examples include electronic device (e.g., plasma display screen) manufacture, electronic component packaging, abrasive belts, and polymer film web handling.

To combat these problems, antistatic agents are commonly used. An antistatic agent is a compound used for treatment of materials or their surfaces in order to reduce or eliminate buildup of static electricity generally caused by the triboelectric effect. Its role is to make the surface or the material itself slightly conductive, either by being conductive itself, or by absorbing moisture from the air, so some humectants can be used. The molecules of an antistatic agent often have both hydrophilic and hydrophobic areas, similar to those of a surfactant; the hydrophobic side interacts with the surface of the material, while the hydrophilic side interacts with the air moisture and binds the water molecules.

There remains a need for additional materials that can reduce the accumulation of, and/or dissipate, static charge.

K. M. S. Meera et al. (colloids and surfaces, B, BIOINTERFACES, ELSEVIER, vol. 90, pp. 204-210, 12 Oct. 2011) discloses a hydrophilic coating composition comprising a sol-gel silica/nanoclay composite.

### SUMMARY

The present disclosure includes compositions and methods that can produce an outer layer coating on articles where the outer layer coating includes an amorphous silica network and clay particles dispersed in the amorphous silica network. Advantageously, antistatic outer layers according to the present disclosure exhibit improved antistatic properties with respect to corresponding coatings made without the addition of a clay material.

In a first aspect, the present disclosure provides a coating composition that contains essentially only an aqueous medium and both silica nanoparticles and clay particles dispersed in the aqueous medium. The coating composition can have a pH of less than or equal to 4. The silica nanoparticles can have an average particle size in the longest direction of up to 100 nm, and the clay particles can have an average particle size in the longest dimension in a range from about 20 nm to 1000 nm. A weight ratio of the clay particles to the silica nanoparticles can be in a range from 0.01 to 0.25.

In a second aspect, the present disclosure provides a method of providing a coating to a substrate, the method comprising providing a coating composition that contains essentially only an aqueous medium and both silica nanoparticles and clay particles dispersed in the aqueous medium. The coating composition can have a pH of less than or equal to 4. The silica nanoparticles can have an average particle size in the longest direction of up to 100 nm, and the clay particles can have an average particle size in the longest dimension in a range from about 20 nm to 1000 nm. A weight ratio of the clay particles to the silica nanoparticles can be in a range from 0.01 to 0.25. The method further includes contacting the coating composition with a surface of a substrate, and at least partially drying the coating composition to form an outermost layer on the surface of the substrate. The outermost layer includes an amorphous silica network that comprises the silica nanoparticles and the clay particles dispersed in the amorphous silica network.

In a third aspect, the present disclosure provides an article comprising a substrate coated with an outermost layer provided according to a method that includes providing a coating composition that includes an aqueous medium and both silica nanoparticles and clay particles dispersed in the aqueous medium. The coating composition can have a pH of less than or equal to 4.
The silica nanoparticles can have an average particle size in the longest direction of up to 100 nm, and the clay particles can have an average particle size in the longest dimension in a range from about 20 nm to 1000 nm. A weight ratio of the clay particles to the silica nanoparticles can be in a range from 0.01 to 0.25. The method further includes contacting the coating composition with a surface of a substrate, and at least partially drying the coating composition to form an outermost layer on the surface of the substrate. The outermost layer of the article includes an amorphous silica network that comprises the silica nanoparticles and the clay particles dispersed in the amorphous silica network.

Advantageously, antistatic outer layers according to the present disclosure are typically transparent, durable, and unexpectedly exhibit good antistatic properties.

As used herein:
the term "antistatic article" refers to an article wherein at least a portion of a surface of the article has electrical charge dissipating properties;
the term "dispersion of silica nanoparticles" refers to a dispersion wherein individual silica nanoparticles are dispersed, and does not refer to a dispersion of fumed silica, which has sintered primary silica particles aggregated into chains;
the term "essentially free of " means containing less than one percent by weight of, typically less than 0.1 percent by weight of, and more typically less than 0.01 percent by weight of;
the term "essentially free of non-volatile organic compounds" means containing less than one percent by weight of organic compounds having a boiling point above 150° Celsius at 1 atmosphere (100 kPa) of pressure;
the term "nanoparticle" refers to a particle having a particle size of from 1 to 200 nanometers;
the term "nonspherical" as used herein means all 3 dimensional shapes other than spherical ones, including but not limited to particles having needle-like elongated shapes, sting-like elongated shapes, rod-like elongated shapes, chain-like elongated shapes, filamentary elongated shapes, and the like;
the term "organic compound" refers to any compound containing at least one carbon-carbon and/or carbon-hydrogen bond;
the term "particle size" refers to the longest dimension of a particle, which is the diameter for a spherical particle;
the term "silica", used in reference to silica nanoparticles and silica sols, refers to a compound represented by the molecular formula SiO₂ •(H₂O)ₙ, wherein n is a number greater than or equal to zero;
the term "spherical" as used herein means a three dimensional shape, all points of which are equidistance from a fixed point; and
the term "substantially light transmissive" refers to at least 80 percent of light in the wavelength range of 400 to 800 nanometers passes through a coating (or article) of the present disclosure having a thickness in a range of from 0.01 to 100 micrometers. For example, at least 85 percent, at least 90 percent, at least 95 percent, or even at least 98 percent of light in this wavelength light is transmitted through the coating (or article).

The above summary of the present disclosure is not intended to describe each embodiment of the present invention. The details of one or more embodiments of the invention are also set forth in the description below. Other features, objects, and advantages of the invention will be apparent from the description and from the claims.

### BRIEF DESCRIPTION OF THE DRAWINGS

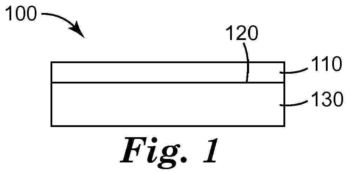

FIG. 1 is a schematic side view of an exemplary article 100 according to the present disclosure.

### DETAILED DESCRIPTION

As used herein, forms of the words "comprise", "have", and "include" are legally equivalent and open-ended. Therefore, additional non-recited elements, functions, steps or limitations may be present in addition to the recited elements, functions, steps, or limitations.

Some clay coatings can be useful, for example, as antistatic coatings, although the clay coatings may not be sufficiently durable for coating applications where durability becomes critical, without the addition of some type of binder or overcoat layer. Silica coatings, in contrast, can be used in coating applications where durability of the coating is important. Surprisingly, it has now been found that the addition of small amounts of clay to nanosilica can provide a coating having good antistatic properties in combination with good durability properties.

A nanosilica/clay coating composition of the present disclosure has silica nanoparticles dispersed in aqueous liquid medium, having a pH less than or equal to 4, less than or equal to 3, less than or equal to 2, less than or equal to 1, or even less than or equal to 0.5, and clay particles dispersed in the aqueous liquid medium.

The silica nanoparticles have an average particle size in a longest dimension in a range from 2 nm to 200 nm, or more preferably in a range from 2 nm to 100 nm. Of course, silica particles with a particle size greater than 200 nm (e.g., up to 2 micrometers in particle size) may also be included, but typically in a minor amount. The silica nanoparticles can be polydispersed or mono-dispersed. When polydispersed, the nanosilica can have an average particle size of up to 100 nm. When mono-dispersed, the nanosilica preferably have an average particle size of 45 nm or less, or more preferably 25 nm or less. The average primary particle size may be determined, for example, using transmission electron microscopy.

Nanoparticles (e.g., silica nanoparticles) included in the coating composition can be spherical or non-spherical with any desired aspect ratio. Aspect ratio refers to the ratio of the average longest dimension of the nanoparticles to their average shortest dimension. The aspect ratio of non-spherical nanoparticles is often at least 2:1, at least 3:1, at least 5:1, or at least 10:1. Non-spherical nanoparticles may, for example, have the shape of rods, ellipsoids, and/or needles. The shape of the nanoparticles can be regular or irregular. The porosity of coatings can typically be varied by changing the amount of regular and irregular-shaped nanoparticles in the coating composition and/or by changing the amount of spherical and non-spherical nanoparticles in the coating composition.

Acicular silica nanoparticles may be used provided that the average silica nanoparticle size constraints described above are achieved.

In some embodiments, the silica nanoparticles have a surface area greater than 150 square meters per gram (m²/g), greater than 200 m²/g, or even greater than 400 m²/g.

In some embodiments, the total weight of the silica nanoparticles in the coating composition is at least 0.1 percent by weight, typically at least 1 percent by weight, and more typically at least 2 percent by weight. In some embodiments, the total weight of the silica nanoparticles in the composition is no greater than 50 percent by weight, or no greater than 40 percent by weight, more desirably no greater than 10 percent by weight, and even more desirably no greater than 7 percent by weight.

The silica nanoparticles in coating compositions of the present disclosure can be obtained from, for example, an "initial silica sol composition". Silica sols, which are stable dispersions of silica nanoparticles in aqueous liquid medium, are well-known in the art and available commercially.
Typically, the initial silica sol composition does not include, or is essentially free of, fumed silica, although this is not a requirement.

Silica nanoparticle dispersions (e.g., silica sols) in water or water-alcohol solutions are available commercially, for example, under the trade designations "LUDOX (marketed by E. I. du Pont de Nemours and Co., Wilmington, Delaware), "NYACOL" (marketed by Nyacol Co., Ashland, Massachusetts), and "NALCO" (manufactured by Ondea Nalco Chemical Co., Oak Brook, Illinois). One useful silica sol is available under the trade designation "NALCO 2326", which is available as a silica sol with an average particle size of 5 nanometers, pH = 10.5, and solid content 15 percent solids by weight. Other commercially available silica nanoparticles include those available under the trade designations "NALCO 1115" (average particle size of 4 nm, 15 percent solids by weight dispersion, pH = 10.4), "NALCO 1130" dispersion, average particle size of 8 nm, 30 percent solids by weight dispersion, pH = 10.2), "NALCO 1050" (average particle size 20 nm, 50 percent solids by weight dispersion, pH = 9.0), "NALCO 2327" (average particle size of 20 nm, 40 percent solids by weight dispersion, pH = 9.3), and "NALCO 1030" (average particle size of 13 nm, 30 percent solids by weight dispersion, pH = 10.2).

Useful acicular silica nanoparticles may be as an aqueous suspension, for example, from Nissan Chemical Industries (Tokyo, Japan) under the trade designation "SNOWTEX-UP". The mixture consists of 20 to 21 weight percent of acicular silica, less than 0.35 weight percent of Na₂O, and water. The particles are about 9 to 15 nanometers in diameter and have lengths of 40 to 200 nanometers. The suspension has a viscosity of <100 mPa at 25 °C, a pH of about 9 to 10.5, and a specific gravity of about 1.13 at 20 °C.

Other useful acicular silica nanoparticles may be obtained from as an aqueous suspension, for example, from Nissan Chemical Industries under the trade designations "SNOWTEX-PS-S" and "SNOWTEX-PS-M". The suspended SNOWTEX-PS-S and SNOWTEX-PS-M acicular silica nanoparticles have a morphology of a string of pearls. The mixture consists of 20 to 21 weight percent of silica, less than 0.2 weight percent of Na₂O and water. The SNOWTEX-PS-M particles are about 18 to 25 nanometers in diameter and have lengths of 80 to 150 nanometers. The particle size is 80 to 150 by dynamic light scattering methods. The suspension has a viscosity of <100 mPas at 25 °C, a pH of about 9 to 10.5, and a specific gravity of about 1.13 at 20 °C. The SNOWTEX-PS-S silica nanoparticles have a particle diameter of 10 to 15 nm and a length of 80 to 120 nm.

Silica sols having a pH of at least 8 can also be prepared according to the methods described in U.S. Patent No. 5,964,693 (Brekau et al.).

The initial silica sol composition can have a pH greater than 6, more typically greater than 7, more typically greater than 8, and even more typically greater than 9. The initial silica sol composition is acidified by addition of inorganic acid until it has a pH of less than or equal to 4, typically less than 3, or even less than 2 thereby providing the coating composition. The pH of the initial silica sol can have a lower limit equal to 0.5 or even equal to 1. Useful inorganic acids (i.e., mineral acids) include, for example, hydrochloric acid, nitric acid, sulfuric acid, phosphoric acid, perchloric acid, chloric acid, and combinations thereof. Typically, the inorganic acid is selected such that it has a pKa of less than or equal to two, less than one, or even less than zero, although this is not a requirement. Without wishing to be bound by theory, the present inventors believe that some chemical bond formation or even thick bond formation between the silica nanoparticles occurs as the pH falls, resulting in a dispersion comprising slightly agglomerated nanoparticles.

It has been observed that acidification of the initial silica sol can be carried out either before or after addition of clay particles to the silica sol, to provide a coating composition of the present disclosure having a pH of less than or equal to 4.

When an initial silica sol of the present disclosure is acidified with an inorganic acid and then used in the preparation of an antistatic layer 130 of the present disclosure, residual amounts of the inorganic acid can be expected to be present in antistatic layer 130. The detection of residual amounts of the inorganic acid (or at least the anion component thereof) in antistatic layer 130 in a multilayer antistatic coating 120 can even be indicative of the inorganic acid that was used in acidifying the initial silica sol.

The clay particles have an average particle size in the longest dimension in a range from 20 nm to 1000 nm. In some embodiments, the clay particles desirably have an average particle size in the longest dimension in a range from 100 nm to 1000 nm, or even in a range from 20 nm to 50 nm. The selection of average particle size for clay particles can depend in part on the selection of a particular type of clay, as will be described.

Clay materials suitable for use in compositions, methods, and articles of the present disclosure can include those in the geological classes of the smectites, the kaolins, the illites, the chlorites, the serpentines, the attapulgites, the palygorskites, the vermiculites, the glauconites, the sepiolites, and the mixed layer clays. Smectites, for example, can include montmorillonite, bentonite, pyrophyllite, hectorite, saponite, sauconite, nontronite, talc, beidellite, and volchonskoite. Kaolins, for example, can include kaolinite, dickite, nacrite, antigorite, anauxite, halloysite, indellite and chrysotile. Illites, for example, include bravaisite, muscovite, paragonite, phlogopite and biotite. Chlorites, for example, can include corrensite, penninite, donbassite, sudoite, pennine and clinochlore. Mixed layer clays, for example, can include allevardite and vermiculitebiotite. Variants and isomorphic substitutions of these layered clay minerals offer unique applications.

Layered clay minerals may be either naturally occurring or synthetic. An example of one non-limiting embodiment of the coating composition uses natural or synthetic hectorites, montmorillonites and bentonites. Typical examples of montmorillonite and bentonite clays can include those clays available from Southern Clay Products, Gonzales, TX, under the trade designations "CLOISITE", "MINERAL COLLOID", "NANOFIL", "GELWHITE", and "OPTIGEL" (e.g., "MINERAL COLLOID BP", "CLOISITE NA+", "NANOFIL 116", and "OPTIGEL CK"), as well as those clays available from R. T. Vanderbilt, Murray, KY, under the trade designation "VEEGUM" (e.g., "VEEGUM PRO" and "VEEGUM F"; and that clay available from Nanocor, Inc., Hoffman Estates, IL, under the trade designation "NANOMER". Examples of hectorite clays include the commercially available clays available from Southern Clay Products, Inc., Gonzales, TX, under the trade designation "LAPONITE". Another embodiment uses vermiculite clays, for example, those vermiculite clays that are commercially available from Specialty Vermiculite Corp., Enoree, SC, under the trade designations "VERMICULITE", "MICROLITE", "VERXITE", and "ZONOLITE".

Natural clay minerals typically exist as layered silicate minerals and less frequently as amorphous minerals. A layered silicate mineral has SiO₄ tetrahedral sheets arranged into a two-dimensional network structure. A 2:1 type layered silicate mineral has a laminated structure of several to several tens of silicate sheets having a three layered structure in which a magnesium octahedral sheet or an aluminum octahedral sheet is sandwiched between two sheets of silica tetrahedral sheets.

Synthetic clays of the present disclosure predominantly assume the form of agglomerates due to consolidation of the primary particles. Such agglomerates may reach diameters of several thousand nanometers, such that the desired characteristics associated with the nanoscale nature of the particles cannot be achieved. The particles may be deagglomerated, for example, by grinding as described in EP-A 637,616 or by dispersion in a suitable carrier medium, such as water or water/alcohol and mixtures thereof.

The production of nanoscale powders such as layered hydrous silicate, layered hydrous aluminum silicate, fluorosilicate, mica-montmorillonite, hydrotalcite, lithium magnesium silicate and lithium magnesium fluorosilicate are common. An example of a substituted variant of lithium magnesium silicate is where the hydroxyl group is partially substituted with fluorine. Lithium and magnesium may also be partially substituted by aluminum. In fact, the lithium magnesium silicate may be isomorphically substituted by any member selected from the group consisting of magnesium, aluminum, lithium, iron, chromium, zinc and mixtures thereof.

Synthetic hectorite was first synthesized in the early 1960's and is now commercially available from Southern Clay Products, Inc., under the trade designation "LAPONITE". There are many grades or variants and isomorphous substitutions of LAPONITE, including those synthetic hectorites available under the trade designations "LAPONITE B", "LAPONITE S", "LAPONITE XLS", "LAPONITE RD", "LAPONITE XLG", "LAPONITE S482", and "LAPONITE RDS". One embodiment of the present disclosure uses "LAPONITE RD". having the following characteristics: analysis (dry basis) SiO₂ 59.5%, MgO 27.5%, Na₂O 2.8%, Li₂O 0.8%, structural H₂O 8.2%; bulk density 1.0.

Some synthetic hectorites contain fluorine. An isomorphous substitution of the hydroxyl group with fluorine will produce synthetic clays referred to as sodium magnesium lithium fluorosilicates. These sodium magnesium lithium fluorosilicates, marketed as "LAPONITE B" and "LAPONITE S", may contain fluoride ions of up to approximately 10% by weight. It should be understood that the fluoride ion content useful in the compositions described herein can comprise any whole or decimal numeric percentage between 0 and 10 or more. "LAPONITE B", a sodium magnesium lithium fluorosilicate, has a flat, circular plate-like shape, and may have a diameter with a mean particle size, depending on fluoride ion content, that is any number (or narrower set of numbers) that is within the range of between about 25 to about 100 nanometers. For example, in one non-limiting embodiment, "LAPONITE B" may be between about 25 to about 40 nanometers in diameter and about 1 nanometer in thickness. Another variant, "LAPONITE S", contains about 6% by weight of tetrasodium pyrophosphate as an additive.

The ratio of the largest dimension of a particle to the smallest dimension of a particle is known as the particle's aspect ratio. The aspect ratio of the nanoparticles, in some cases, is of interest in forming films with the desired characteristics. The average aspect ratio of individual particles of "LAPONITE B" is approximately 20 to 40. In some embodiments, a high aspect ratio may be desirable for film formation using nanosized clay materials. The aspect ratio of the dispersed particles in a suitable carrier medium, such as water is also of interest. The aspect ratio of the particles in a dispersed medium can be considered to be lower where several of the particles are aggregated than in the case of individual particles. The aspect ratio of dispersions can be adequately characterized by transmission electron microscopy ("TEM"). "LAPONITE B" occurs in dispersions as essentially single clay particles or stacks of two clay particles. Thus, the aspect ratio of the particles dispersed in the carrier medium can be affected if there is an aggregation of individual particles. In certain non-limiting embodiments, it may be desirable for at least some of (and preferably a plurality of) individual (non-aggregated) platelet and disc-shaped nanoparticles to have at least one dimension that is greater than or equal to about 0.5 nanometers, and an aspect ratio of greater than or equal to about 15. The aspect ratio of "LAPONITE B" is about 20 to 40. Larger aspect ratios may be more desirable for platelet and disc-shaped particles than for rod-shaped particles. The aspect ratio of nanosized clays is significantly smaller than that of natural clays where the aspect ratio is typically greater than 250 for natural occurring clays.

The synthetic hectorites designated as "LAPONITE" can be described as lithium magnesium silicate having the general formula: [Mg_{w}LiₓSi₈O₂₀OH_{4-y}F_{y}]^{z-} wherein w=3 to 6, x=0 to 3, y=0 to 4, z=12-2w-x, and the overall negative lattice charge is balanced by counter-ions; and wherein the counter-ions are selected from the group consisting of selected Na⁺, K⁺, NH₄⁺, Cs⁺, Li⁺, Mg⁺⁺, Ca⁺⁺, Ba⁺⁺, N(CH₃)₄⁺and mixtures thereof. If the "LAPONITE" is modified with a cationic organic compound, then the counter-ion can be any suitable cationic organic group.

Depending upon the application, the use of variants and isomorphous substitutions of "LAPONITE", provides great flexibility in engineering the desired properties of the coating composition of the present disclosure. The individual platelets of "LAPONITE" are negatively charged on their faces and possess a high concentration of surface bound water.

In some embodiments, the clay can be a smectite, such as hectorite or montmorillonite. In some embodiments, the clay can include a vermiculite.

In some embodiments, the selection of clay particle size can depend on the selection of the type of clay. For example, when the clay is a hectorite (e.g., "LAPONITE"), the average particle size is desirably in a range from 20 nm to 50 nm. Alternatively, when the clay is a montmorillonite, the average particle size is desirably in a range from 100 nm to 1000 nm.

In some embodiments of coating compositions of the present disclosure, a weight ratio of the clay particles to the silica nanoparticles is at least 0.01, or at least 0.02, or at least 0.05, or even at least 0.11. In some embodiments of coating compositions of the present disclosure, a weight ratio of the clay particles to the silica nanoparticles is less than 0.43, or at most 0.25, or even at most 0.11. In some embodiments of coating compositions of the present disclosure, a weight ratio of the clay particles to the silica nanoparticles is in a range from 0.01 to 0.25, or in a range from 0.05 to 0.25, or even in a range from 0.05 to 0.11.

In some embodiments, the coating composition is essentially free of organic polymer. In some embodiments, the coating composition is essentially free of non-volatile organic compounds. In some embodiments, the coating composition is essentially free of organic surfactants.

The aqueous liquid medium of the coating composition may comprise (in addition to water) at least one volatile organic solvent. Examples of suitable volatile organic solvents include those volatile organic solvents that are miscible with water such as, e.g., methanol, ethanol, isopropanol, and combinations thereof. However, for many applications, reduction or elimination of volatile organic compounds will be desirable, and advantageously the present disclosure may be practiced using initial silica sol compositions and/or coating compositions that are essentially free of volatile organic solvent.

In some embodiments, the total amount of solids in the coating composition is in a range from 1 to 40 weight percent of a total weight of the coating composition, or more preferably in a range from 5 weight percent to 10 weight percent of a total weight of the coating composition.

The dried coatings of the present disclosure may comprise silica from 30 to 99 percent by weight of silica, desirably from 60 to 97.5 percent by weight of silica, more desirably from 80 to 95 percent by weight of silica, although other amounts may also be used.

Once made, the coating composition is typically stable over long periods of time, over a range of temperatures, although this is not a requirement. The coating composition may be coated onto a substrate and at least partially dried, typically substantially completely dried. Without wishing to be bound by theory, it is believed that during the drying process, condensation processes lead to chemical bonding between the silica nanoparticles and/or agglomerates at points of contact to form a silica matrix.

The coating composition can be contacted with a surface of a substrate and at least partially dried to form a coated article. In some embodiments, the resulting coated article is an antistatic article having desirable antistatic properties. Unexpectedly, it was discovered that coating compositions according to the present disclosure can be contacted with a surface of a substrate and at least partially dried to provide a defect-free outermost layer with surprisingly good antistatic properties. Suitable methods of drying the coating composition include, for example, evaporation in air at about room temperature, ovens, heated air blowers, infrared heaters, and hot cans. Drying is typically carried out until the coating composition is substantially completely dry, although this is not a requirement. Once contacted with the substrate and at least partially dried, the antistatic layer may be aged for a period of time such as for example, at least 1 hour (hr), at least 4 hrs, at least 8 hrs, at least 24 hrs, at least 72 hrs, at least 1 week, or even at least 2 weeks, during which time the electrical conductivity of the antistatic layer may improve.

While the outermost, antistatic layer on the coated article can have an average surface resistivity of less than or equal to 10⁹ ohms per square ("Ω/square") at 25 °C and 50 percent relative humidity, in some embodiments, it may have a surface resistivity of less than or equal to 5 x 10⁸ ohms per square, less than 2 x 10⁸, less than 8 x 10⁷, less than 5 x 10⁷, less than 2 x 10⁷, less than 8 x 10⁶, or even less than 4 x 10⁶ ohms per square. Average surface resistivity can be determined according to ASTM D-257-07 "Standard Test Methods for DC Resistance or Conductance of Insulating Materials".

Referring now to FIG. 1, coated article 100 comprises outermost layer 110 disposed on surface 120 of substrate layer 130. Outermost layer 110 can be an antistatic layer according to the present disclosure, including an at least partially dried coating of the coating composition described herein that includes silica nanoparticles and clay particles. Examples of suitable methods of contacting the coating composition with the surface of the substrate include roll coating, spray coating, gravure coating, dip coating, and curtain coating. Typically, outermost layer 110 has a thickness in the range of from 0.01 to 100 micrometers, desirably 0.01 to 3 micrometers, although this is not a requirement.

In some embodiments, an intervening layer (not shown) can be included between substrate layer 130 and outermost layer 110. The intervening layer (not shown) can be included, for example, to provide enhanced adhesion between substrate layer 130 and outermost layer 110. However, in other embodiments of the present disclosure, the intervening layer is not a requirement.

Typically, outermost layer 110 according to the present disclosure is at least substantially light transmissive; however this is not a requirement.

Examples of suitable substrates include virtually any dimensionally-stable material. Examples include glass substrates (e.g., mirrors, windows, windshields, tables, lenses, and prisms), metal substrates, ceramic substrates, organic polymer substrates (e.g., molded polymer articles, automotive paints and clearcoats, polymer films, retroreflective sheeting, indoor signage, and outdoor signage), and fabric (e.g., upholstery fabric). In some embodiments, the substrate is at least one of glass or an organic polymer. In some embodiments, the organic polymer selected from any of a polyester (e.g., polyethylene terephthalate or polybutylene terephthalate), polycarbonate, allyldiglycol carbonate, acrylics (e.g., polymethyl methacrylate (PMMA)), polystyrene, polysulfone, polyether sulfone, homo-epoxy polymers, epoxy addition polymers with polydiamines and/or polydithiols, polyamides (e.g., nylon 6 and nylon 6,6), polyimides, polyolefins (e.g., polyethylene and polypropylene), olefinic copolymers (e.g., polyethylene copolymers), and cellulose esters (e.g., cellulose acetate and cellulose butyrate), and combinations thereof

Surprisingly, the aqueous composition of the present disclosure is readily coated onto many hydrophobic surfaces. However, for some hydrophobic substrates, in order to uniformly coat the composition onto such a hydrophobic substrate from an aqueous system, and even more importantly, to enhance the interfacial adhesion of the coatings to substrates, it may be desirable to increase the surface energy of the substrate and/or reduce the surface tension of the coating composition. The surface energy may be increased by oxidizing the substrate surface prior to coating using corona discharge or flame treatment methods. These methods may also improve adhesion of the coating to the substrate. Other methods capable of increasing the surface energy of the substrate include the use of primers such as thin coatings of polyvinylidene chloride (PVDC). Alternatively, the surface tension of the coating composition may be decreased by addition of lower alcohols (C₁ to C₈). In certain special instances in order to improve the coating hydrophilicity, as for desired antifogging properties, and/or to ensure uniform coating of the article from an aqueous or hydroalcoholic solution, it may be beneficial to add a wetting agent, which is typically a surfactant, provided that the selected surfactant is not an organic polymer.

### SELECT EMBODIMENTS OF THE PRESENT DISCLOSURE

The present disclosure provides the following items as select embodiments:
Item 1. A coating composition containing essentially only : an aqueous medium silica nanoparticles dispersed in the aqueous medium, wherein the silica nanoparticles have an average particle size in a longest dimension of up to 100 nm; and clay particles dispersed in the aqueous medium wherein the clay particles have an average particle size in a longest dimension in a range from 20 nm to 1000 nm; wherein a weight ratio of the clay particles to the silica nanoparticles is in a range from 0.01 to 0.25, and wherein the coating composition has a pH of less than or equal to 4.
Item 2. The coating composition of item 1, wherein the coating composition is essentially free of organic polymer.
Item 3. The coating composition of item 1 or item 2, wherein the clay is a smectite.
Item 4: The coating composition of item 1 or item 2, wherein the clay is a hectorite.
Item 5: The coating composition of item 1 or item 2, wherein the clay is a montmorillonite.
Item 6. The coating composition of any one of items 1 to 5, wherein the clay particles have an average particle size in the longest dimension in a range from 20 nm to 50 nm.
Item 7. The composition of any one of items 1 to 5, wherein the clay particles have an average particle size in the longest dimension in a range from 100 nm to 1000 nm.
Item 8. The coating composition of any one of items 1 to 7, wherein the silica nanoparticles have an average particle size of up to 25 nm.
Item 9. The coating composition of any one of items 1 to 8, wherein the silica nanoparticles are spherical.
Item 10. The coating composition of any one of items 1 to 8, wherein the silica nanoparticles are nonspherical.
Item 11. The coating composition of any one of items 1 to 10, wherein the coating composition further comprises a surfactant.
Item 12. The coating composition of any one of items 1 to 11, wherein a total amount of solids in the coating composition is in a range from 1 weight percent to 50 weight percent of a total weight of the coating composition.
Item 13. A method of providing a coating to a substrate, the method comprising: a) providing a coating composition containing essentially only : an aqueous medium; silica nanoparticles dispersed in the aqueous medium, wherein the silica nanoparticles have an average particle size in a longest dimension of up to 100 nm; and clay particles dispersed in the aqueous medium wherein the clay particles have an average particle size in a longest dimension in a range from 20 nm to 1000 nm; wherein a weight ratio of the clay particles to the silica nanoparticles is in a range from 0.01 to 0.25, and wherein the coating composition has a pH of less than or equal to 4; b) contacting the coating composition with a surface of a substrate; and c) at least partially drying the coating composition to form an outermost layer on the surface of the substrate, the outermost layer comprising an amorphous silica network that comprises the silica nanoparticles and the clay particles dispersed in the amorphous silica network.
Item 14. The method of item 13, wherein the coating composition is essentially free of organic polymer.
Item 15. The method of item 13 or item 14, wherein the clay is a smectite, a vermiculite, or a combination thereof.
Item 16. The method of item 13 or item 14, wherein the clay is a hectorite.
Item 17. The method of item 13 or item 14, wherein the clay is a montmorillonite.
Item 18. The method of any one of items 13 to 17, wherein a total amount of solids in the coating composition is in a range from 1 weight percent to 50 weight percent of a total weight of the coating composition.
Item 19. The method of any one of items 13 to 18, wherein the substrate is a glass or an organic polymer.
Item 20. The method of item 19, wherein the organic polymer is selected from any of polyethylene terephthalate, polycarbonate, poly(methyl methacrylate), polyurethane, polyethylene, polypropylene, copolymers of polyethylene and polypropylene, or combinations thereof.
Item 21. The method of item 19, wherein the organic polymer is polyethylene terephthalate.
Item 22. The method of any one of items 13 to 21, wherein the outermost layer is light transmissive.
Item 23. The method of any one of items 13 to 22, wherein the outermost layer has a thickness in a range from 0.01 micrometer to 3 micrometers.
Item 24. The method of any one of items 13 to 23, wherein the outermost layer has an average surface resistivity of less than or equal to 10⁹ ohms per square at 25 °C and 50 percent relative humidity.
Item 25. The method of any one of items 13 to 24, wherein providing the coating composition having a pH of less than or equal to 4 comprises providing an initial silica sol having a pH greater than 6 and acidifying the initial silica sol by addition of inorganic acid.
Item 26 The method of item 25, wherein the inorganic acid is any of hydrochloric acid, nitric acid, sulfuric acid, phosphoric acid, perchloric acid, chloric acid, or a combination thereof.
Item 27. An article comprising a substrate coated with an outermost layer according to the method of any one of items 13 to 26.
Item 28. A coated article comprising a substrate layer coated with an at least partially dried outermost layer of the coating composition of any one of items 1 to 12.
Item 29. The coated article of item 28, wherein the wherein the clay is a smectite, a vermiculite, or a combination thereof.
Item 30: The coating composition of item 28, wherein the clay is a hectorite.
Item 31: The coating composition of item 28, wherein the clay is a montmorillonite.
Item 32. The coated article of any one of items 28 to 31, wherein the substrate is a glass or an organic polymer.
Item 33. The coated article of item 32, wherein the organic polymer is selected from any of polyethylene terephthalate, polycarbonate, poly(methyl methacrylate), polyurethane, polyethylene, polypropylene, copolymers of polyethylene and polypropylene, or combinations thereof.
Item 34. The coated article of item 32, wherein the organic polymer is polyethylene terephthalate.
Item 35. The coated article of any one of items 28 to 34, wherein the outermost layer is light transmissive.
Item 36. The coated article of any one of items 28 to 35, wherein the outermost layer has a thickness in a range from 0.01 micrometer to 3 micrometers.
Item 37. The coated article of any one of items 28 to 36, wherein the outermost layer has an average surface resistivity of less than or equal to 10⁹ ohms per square at 25 °C and 50 percent relative humidity.
Item 38. The coating composition of item 4, wherein the clay is a hectorite.
Item 39. The coating composition of item 5, wherein the clay is a montmorillonite.
Item 40. The coating composition of item 3, wherein the clay is a bentonite, a hectorite, a montmorillonite, or a mixture thereof.

Objects and advantages of this disclosure are further illustrated by the following non-limiting examples, but the particular materials and amounts thereof recited in these examples, as well as other conditions and details, should not be construed to unduly limit this disclosure.

### EXAMPLES

Unless otherwise noted, all parts, percentages, ratios, etc. in the Examples and the rest of the specification are by weight.

### Materials

Hydrochloric acid (HCl) and sulfuric acid (H₂SO₄) were purchased from J.T. Baker, Phillipsburg, NJ. Nitric acid (HNO₃) was purchased from VWR, West Chester, PA. Phosphoric acid (H₃PO₄) was purchased from Alfa Aesar, Ward Hill, MA. Other materials are listed in Table 1.

**TABLE 1**

| | |
|---|---|
| Float glass | Float glass, 5/16 inch (7.9 mm) thick obtained from the 3M Company, St. Paul, MN glass blowing shop. |
| LapS482 | A hectorite clay obtained from Southern Clay Products (Gonzales, TX) under the trade designation "LAPONITE S482" |
| MCBP | Refined bentonite (i.e., montmorillonite) clay obtained from Southern Clay Products, Inc., Gonzales, TX, under the trade designation "MINERAL COLLOID BP" |
| Microlite 963++ | A vermiculite obtained from Specialty Vermiculite, Corp., Enoree, SC, under the trade designation "MICROLITE 963++". |
| NALCO 1115 | Colloidal dispersion of silica nanoparticles (average particle size 4 nm diameter), obtained from Nalco Company, Naperville, IL, under the trade designation "NALCO 1115" |
| NF116 | Refined bentonite (i.e., montmorillonite) clay obtained from Southern Clay Products, Inc., Gonzales, TX, under the trade designation "NANOFIL 116", typical partical size < 15 micrometers. |
| PET | 2 mil (51 micrometers) polyethylene terephthalate film, obtained from 3M Company, St. Paul, MN |

### COATING PROCEDURE

Coating dispersions were prepared at 5 weight percent solids in deionized water, using the clay: silica nanoparticle weight ratios indicated for each of the Examples and Comparative Examples. The pH of the coating solutions was adjusted to pH 2 using the acids indicated for each of the Examples and Comparative Examples. Mayer Rods #6 to #15 (obtained from RD Specialties, Inc., Webster, NY) corresponding to wet film thicknesses of roughly 0.50 mil to 1.35 mil (13 micrometers to 34 micrometers) were used to coat the coating dispersions on either PET or float glass substrates. Coatings were allowed to air dry for as little as 30 seconds to overnight and then were cured in an oven at 120 °C for 10 minutes. The coatings on float glass substrates were sintered at 550 °C for 10 minutes.

### TEST METHOD FOR EVALUATING THE SURFACE RESISTIVITY

The samples prepared according to the Examples and Comparative Examples described below were evaluated for their surface resistivity using a Monroe Electronics 272A PORTABLE SURFACE RESISTIVITY METER (purchased from Monroe Electronics, Inc., Lyndonville New York) according to ASTM D-257-07 "Standard Test Methods for DC Resistance or Conductance of Insulating Materials". The surface resistivity was measured at an applied voltage of 100 V using a Monroe Model 96101A-1 guarded ring-type electrode system. Unless stated otherwise, coatings were stored in a controlled temperature and humidity room at 23 °C and 50% RH overnight before measuring surface resistivity. The upper limit of surface resistivity measurable by the instrument was 2×10¹⁴ Ω/square. If the surface resistivity of a coating exceeded this value, a value of 2×10¹⁴ Ω/square was recorded. Average surface resistivity was determined as an average of three collected data points.

### TEST METHOD FOR ASSESSING MECHANICAL DURABILITY

Abrasion resistance was assessed qualitatively after five hard manual rubs with a 1-ply laboratory cleaning wipe (obtained from Kimberly-Clark, Irving, TX, under the trade designation "KIMWIPE"). Abrasion resistance was carried out at 23 °C and 50% RH. Ratings of the appearance of the rubbed region were assigned according to the criteria listed in Table 2.

**TABLE 2**

| Rating | Criteria |
|---|---|
| No damage | no visible scratches |
| Light scratching | 1 to 3 visible scratches |
| Medium scratching | intermediate between light scratching and heavy scratching |
| Heavy scratching | dense scratching, hazy appearance |
| Partial removal | coating visibly removed from substrate |

Samples of PET were coated with nanosilica (NALCO 1115) / clay (MCBP) coating compositions at 5 weight percent solids in deionized water and acidified to pH 2 with HNO₃, HCl, or H₃PO₄, using the range of clay: nanosilica weight ratios indicated in Table 3. The coated PET samples were conditioned at 50% relative humidity overnight, and then Average Surface Resistivity values were determined according to the TEST METHOD FOR EVALUATING THE SURFACE RESISTIVITY, and the results were as summarized in Table 3.

**TABLE 3**

| Sample | Clay:Nanosilica Weight Ratio | Acid | Average Surface Resistivity at 23 °C and 50% Relative Humidity, Ω/square |
|---|---|---|---|
| CE1 | 0.00 | HNO₃ | 1.3 x 10¹⁴ |
| Ex. 1 | 0.02 | HNO₃ | 4.2 x 10⁸ |
| Ex. 2 | 0.05 | HNO₃ | 4.4 x 10⁷ |
| Ex. 3 | 0.11 | HNO₃ | 7.8 x 10⁶ |
| Ex. 4 | 0.25 | HNO₃ | 6.8 x 10⁶ |
| CE2 | 0.43 | HNO₃ | 4.8 x 10⁶ |
| CE3 | 0.00 | HCl | 4.1 x 10¹³ |
| Ex. 5 | 0.02 | HCl | 4.5 x 10⁷ |
| Ex. 6 | 0.05 | HCl | 2.3 x 10⁷ |
| Ex. 7 | 0.11 | HCl | 7.1 x 10⁶ |
| Ex. 8 | 0.25 | HCl | 3.6 x 10⁶ |
| CE4 | 0.43 | HCl | 4.2 x 10⁶ |
| CE5 | 0.00 | H₃PO₄ | 1.2 x 10⁸ |
| Ex. 9 | 0.02 | H₃PO₄ | 3.9 x 10⁸ |
| Ex. 10 | 0.05 | H₃PO₄ | 1.8 x 10⁹ |
| Ex. 11 | 0.11 | H₃PO₄ | 6.5 x 10⁸ |
| Ex. 12 | 0.25 | H₃PO₄ | 2.4 x 10⁸ |
| CE6 | 0.43 | H₃PO₄ | 3.9 x 10⁸ |

For each of samples in Table 3, no organic polymers, surfactants or other potentially leachable small molecules or oligomers were included for coating the bare PET substrate.

The pure silica coatings made from H₃PO₄-acidified solutions (e.g., Comparative Example 5) were static dissipative. Addition of clay had very little effect on the surface resistivity of these coatings (see Examples 9 to 12 and Comparative Example 6).

Additional studies using overnight conditioning at 20% relative humidity instead of 50% relative humidity generally showed an increase in Average Surface Resistivity of about one order of magnitude for nitric acid, about two to four orders of magnitude for hydrochloric acid, and about two to three orders of magnitude for phosphoric acid. The coatings made from solutions acidified with nitric acid were observed to be the least affected by the change to the drier 20% relative humidity. The 20% relative humidity data is summarized in Table 4.

**TABLE 4**

| Sample | Clay:Nanosilica Weight Ratio | Acid | Average Surface Resistivity at 23 °C and 20% Relative Humidity, Ω/square |
|---|---|---|---|
| CE7 | 0.00 | HNO₃ | 2.0 x 10¹⁴ |
| Ex. 13 | 0.02 | HNO₃ | 1.2 x 10¹⁰ |
| Ex. 14 | 0.05 | HNO₃ | 4.8 x 10⁸ |
| Ex. 15 | 0.11 | HNO₃ | 9.5 x 10⁷ |
| Ex. 16 | 0.25 | HNO₃ | 7.9 x 10⁷ |
| CE8 | 0.43 | HNO₃ | 7.6 x 10⁷ |
| CE9 | 0.00 | HCl | 2.1 x 10¹² |
| Ex. 17 | 0.02 | HCl | 4.2 x 10⁹ |
| Ex. 18 | 0.05 | HCl | 2.4 x 10⁹ |
| Ex. 19 | 0.11 | HCl | 3.3 x 10¹⁰ |
| Ex. 20 | 0.25 | HCl | 1.3 x 10⁹ |
| CE10 | 0.43 | HCl | 2.3 x 10¹⁰ |
| CE11 | 0.00 | H₃PO₄ | 2.7 x 10¹¹ |
| Ex. 21 | 0.02 | H₃PO₄ | 1.7 x 10¹² |
| Ex. 22 | 0.05 | H₃PO₄ | 2.2 x 10¹² |
| Ex. 23 | 0.11 | H₃PO₄ | 5.6 x 10¹¹ |
| Ex. 24 | 0.25 | H₃PO₄ | 1.3 x 10¹¹ |
| CE12 | 0.43 | H₃PO₄ | 5.1 x 10¹⁰ |

In summary, addition of clay particles to nanosilica coating compositions in low weight ratios of clay:silica nanoparticles reduced the surface resistivity of the resulting coatings dramatically in some cases, with some dependence on acid type and clay loading.

Samples of PET were coated with nanosilica (NALCO 1115) / clay coating compositions at 5 weight percent solids in deionized water and acidified to pH 2 with HNO₃ using the range of clay:nanosilica weight ratios and types of clay indicated in Table 5. A #15 Mayer rod was used for all samples except those containing LapS482; these latter coatings were deposited using a #7 Mayer rod. The coated PET samples were conditioned at 50% relative humidity overnight, and then Average Surface Resistivity values were determined according to the TEST METHOD FOR EVALUATING THE SURFACE RESISTIVITY, and the results were as summarized in Table 5. Abrasion resistance of the coated samples was measured according to the TEST METHOD FOR ASSESSING MECHANICAL DURABILITY, and the results were also summarized in Table 5.

**TABLE 5**

| Sample | Clay:Nanosilica Weight Ratio | Clay Type | Average Surface Resistivity at 22 °C and 50% Relative Humidity, Ω/square | Abrasion Resistance |
|---|---|---|---|---|
| CE13 | 0 | MCBP | >2 x 10¹⁴ | no damage |
| Ex. 25 | 0.02 | MCBP | 1.6 x 10¹² | no damage |
| Ex. 26 | 0.05 | MCBP | 8.6 x 10⁶ | light scratching |
| Ex. 27 | 0.11 | MCBP | 2.2 x 10⁶ | heavy scratching |
| Ex. 28 | 0.25 | MCBP | 2.2 x 10⁶ | heavy scratching, partial removal |
| CE14 | 0.43 | MCBP | 2.8 x 10⁶ | heavy scratching, partial removal |
| Ex. 29 | 0.02 | Microlite 963++ | >2 x 10¹⁴ | no damage |
| Ex. 30 | 0.05 | Microlite 963++ | 2.2 x 10⁸ | medium scratching |
| Ex. 31 | 0.11 | Microlite 963++ | 9.6 x 10⁸ | medium scratching |
| Ex. 32 | 0.25 | Microlite 963++ | 1.8 x 10⁸ | heavy scratching |
| CE15 | 0.43 | Microlite 963++ | 9.9 x 10⁷ | heavy scratching |
| Ex. 33 | 0.02 | LapS482 | >2 x 10¹⁴ | light scratching |
| Ex. 34 | 0.05 | LapS482 | >2 x 10¹⁴ | light scratching |
| Ex. 35 | 0.11 | LapS482 | 3.0 x 10¹¹ | light scratching |
| Ex. 36 | 0.25 | LapS482 | 3.4 x 10⁷ | heavy scratching, partial removal |
| CE16 | 0.43 | LapS482 | 5.7 x 10⁷ | heavy scratching, partial removal |
| CE17 | Pure clay | LapS482 | 1.7 x 107 | heavy scratching |

Samples of float glass were coated with nanosilica (NALCO 1115) / clay (NF116) acidified to pH 2 with nitric acid, according to the clay:silica weight ratios indicated in Table 6, and the coated samples were then sintered at 550 °C for 10 min. Abrasion resistance testing was performed according to the TEST METHOD FOR ASSESSING MECHANICAL DURABILITY, and the results were as summarized in Table 6.

**TABLE 6**

| Sample | Clay:Silica Weight Ratio | Substrate | Dry Rub Test |
|---|---|---|---|
| Ex. 37 | 0.11 | float glass | No damage |
| Ex. 38 | 0.25 | float glass | No damage |

## Claims

1. A coating composition containing essentially only:
an aqueous medium;
silica nanoparticles dispersed in the aqueous medium, wherein the silica nanoparticles have an average particle size in a longest dimension of up to 100 nm; and
clay particles dispersed in the aqueous medium, wherein the clay particles have an average particle size in a longest dimension in a range from 20 nm to 1000 nm;
wherein a weight ratio of the clay particles to the silica nanoparticles is in a range from 0.01 to 0.25, and wherein the coating composition has a pH of less than or equal to 4.

2. The coating composition of claim 1, wherein the coating composition is essentially free of organic polymer.

3. The coating composition of claim 1 or claim 2, wherein the clay is a smectite, hectorite or montmorillonite.

4. The coating composition of any one of claims 1 to 3, wherein the clay particles have an average particle size in the longest dimension in a range from 20 nm to 50 nm.

5. The composition of any one of claims 1 to 3, wherein the clay particles have an average particle size in the longest dimension in a range from 100 nm to 1000 nm.

6. The coating composition of any one of claims 1 to 5, wherein the silica nanoparticles have an average particle size in the longest dimension of up to 25 nm.

7. The coating composition of any one of claims 1 to 6, wherein the coating composition further comprises a surfactant.

8. The coating composition of any one of claims 1 to 7, wherein a total amount of solids in the coating composition is in a range from 1 weight percent to 40 weight percent of a total weight of the coating composition.

9. A method of providing a coating to a substrate, the method comprising:
a) providing a coating composition containing essentially only:
an aqueous medium; silica nanoparticles dispersed in the aqueous medium, wherein the silica nanoparticles have an average particle size in a longest dimension of up to 100 nm; and
clay particles dispersed in the aqueous medium, wherein the clay particles have an average particle size in a longest dimension in a range from 20 nm to 1000 nm;
wherein a weight ratio of the clay particles to the silica nanoparticles is in a range from 0.01 to 0.25, and wherein the coating composition has a pH of less than or equal to 4;
b) contacting the coating composition with a surface of a substrate; and
c) at least partially drying the coating composition to form an outermost layer on the surface of the substrate, the outermost layer comprising an amorphous silica network that comprises the silica nanoparticles and the clay particles dispersed in the amorphous silica network.

10. The method of claim 9 , wherein the coating composition is substantially free of organic polymer.

11. The method of claim 9 or 10, wherein a total amount of solids in the coating composition is in a range from 1 weight percent to 50 weight percent of a total weight of the coating composition.

12. The method of any one of claims 9 to 11, wherein the substrate is a glass or an organic polymer.

13. The method of claim 12, wherein the substrate is selected from any of polyethylene terephthalate, polycarbonate, poly(methyl methacrylate), polyurethane, polyethylene, polypropylene, copolymers of polyethylene and polypropylene, or combinations thereof.

14. The method of any one of claims 9 to 13, wherein the outermost layer is light transmissive.

15. The method of any one of claims 9 to 14, wherein the outermost layer has a thickness in a range from 0.01 micrometer to 3 micrometers.

16. The method of any one of claims 9 to 15, wherein the outermost layer has an average surface resistivity of less than or equal to 10⁹ ohms per square at 25 °C and 50 percent relative humidity.

## Patentansprüche

1. Beschichtungszusammensetzung, die im Wesentlichen nur Folgendes enthält:
ein wässriges Medium;
Siliciumdioxid-Nanoteilchen, die in dem wässrigen Medium dispergiert sind, wobei die Siliciumdioxid-Nanoteilchen eine durchschnittliche Teilchengröße in einer längsten Abmessung von bis zu 100 nm aufweisen; und
Tonteilchen, die in dem wässrigen Medium dispergiert sind,
wobei die Tonteilchen eine durchschnittliche Teilchengröße in einer längsten Abmessung im Bereich von 20 nm bis 1000 nm aufweisen;
wobei ein Gewichtsverhältnis der Tonteilchen zu den Siliciumdioxid-Nanoteilchen im Bereich von 0,01 bis 0,25 liegt, und wobei die Beschichtungszusammensetzung einen pH-Wert von weniger als oder gleich 4 aufweist.

2. Beschichtungszusammensetzung nach Anspruch 1, wobei die Beschichtungszusammensetzung im Wesentlichen frei von organischem Polymer ist.

3. Beschichtungszusammensetzung nach Anspruch 1 oder Anspruch 2, wobei der Ton ein Smectit, Hectorit oder Montmorillonit ist.

4. Beschichtungszusammensetzung nach einem der Ansprüche 1 bis 3, wobei die Tonteilchen eine durchschnittliche Teilchengröße in der längsten Abmessung im Bereich von 20 nm bis 50 nm aufweisen.

5. Zusammensetzung nach einem der Ansprüche 1 bis 3, wobei die Tonteilchen eine durchschnittliche Teilchengröße in der längsten Abmessung im Bereich von 100 nm bis 1000 nm aufweisen.

6. Beschichtungszusammensetzung nach einem der Ansprüche 1 bis 5, wobei die Siliciumdioxid-Nanoteilchen eine durchschnittliche Teilchengröße in der längsten Abmessung von bis zu 25 nm aufweisen.

7. Beschichtungszusammensetzung nach einem der Ansprüche 1 bis 6, wobei die Beschichtungszusammensetzung ferner ein Tensid umfasst.

8. Beschichtungszusammensetzung nach einem der Ansprüche 1 bis 7, wobei eine Gesamtmenge an Feststoffen in der Beschichtungszusammensetzung in einem Bereich von 1 Gewichtsprozent bis 40 Gewichtsprozent eines Gesamtgewichts der Beschichtungszusammensetzung liegt.

9. Verfahren zum Versehen eines Substrats mit einer Beschichtung, wobei das Verfahren Folgendes umfasst:
a) Bereitstellen einer Beschichtungszusammensetzung, die im Wesentlichen nur Folgendes enthält:
ein wässriges Medium;
Siliciumdioxid-Nanoteilchen, die in dem wässrigen Medium dispergiert sind, wobei die Siliciumdioxid-Nanoteilchen eine durchschnittliche Teilchengröße in einer längsten Abmessung von bis zu 100 nm aufweisen; und
Tonteilchen, die in dem wässrigen Medium dispergiert sind, wobei die Tonteilchen
eine durchschnittliche Teilchengröße in einer längsten Abmessung im Bereich von 20 nm bis 1000 nm aufweisen;
wobei ein Gewichtsverhältnis der Tonteilchen zu den Siliciumdioxid-Nanoteilchen im Bereich von 0,01 bis 0,25 liegt, und wobei die Beschichtungszusammensetzung einen pH-Wert von weniger als oder gleich 4 aufweist;
b) Inkontaktbringen der Beschichtungszusammensetzung mit einer Oberfläche eines Substrats; und
c) wenigstens teilweises Trocknen der Beschichtungszusammensetzung, um eine äußerste Schicht auf der Oberfläche des Substrats zu bilden, wobei die äußerste Schicht ein amorphes Siliciumdioxid-Netzwerk umfasst, welches die Siliciumdioxid-Nanoteilchen und die Tonteilchen in dem amorphen Siliciumdioxid-Netzwerk dispergiert umfasst.

10. Verfahren nach Anspruch 9, wobei die Beschichtungszusammensetzung im Wesentlichen frei von organischem Polymer ist.

11. Verfahren nach Anspruch 9 oder 10, wobei eine Gesamtmenge an Feststoffen in der Beschichtungszusammensetzung im Bereich von 1 Gewichtsprozent bis 50 Gewichtsprozent eines Gesamtgewichts der Beschichtungszusammensetzung liegt.

12. Verfahren nach einem der Ansprüche 9 bis 11, wobei das Substrat ein Glas oder ein organisches Polymer ist.

13. Verfahren nach Anspruch 12, wobei das Substrat ausgewählt ist aus einem beliebigen von Polyethylenterephthalat, Polycarbonat, Poly(methylmethacrylat), Polyurethan, Polyethylen, Polypropylen, Copolymeren von Polyethylen und Polypropylen oder Kombinationen davon.

14. Verfahren nach einem der Ansprüche 9 bis 13, wobei die äußerste Schicht lichtdurchlässig ist.

15. Verfahren nach einem der Ansprüche 9 bis 14, wobei die äußerste Schicht eine Dicke im Bereich von 0,01 Mikrometern bis 3 Mikrometern aufweist.

16. Verfahren nach einem der Ansprüche 9 bis 15, wobei die äußerste Schicht einen durchschnittlichen spezifischen Oberflächenwiderstand von weniger als oder gleich 10⁹ Ohm pro Quadrat bei 25 °C und 50 Prozent relativer Feuchtigkeit aufweist.

## Revendications

1. Composition de revêtement contenant essentiellement uniquement :
un milieu aqueux ;
des nanoparticules de silice dispersées dans le milieu aqueux, où les nanoparticules de silice ont une taille de particule moyenne dans une dimension de plus grande longueur allant jusqu'à 100 nm ; et
des particules d'argile dispersées dans le milieu aqueux,
dans laquelle les particules d'argile ont
une taille de particule moyenne dans une dimension de plus grande longueur dans une plage allant de 20 nm à 1000 nm ;dans laquelle un rapport pondéral des particules d'argile par rapport aux nanoparticules de silice est dans une plage de 0,01 à 0,25, et où la composition de revêtement a un pH inférieur ou égal à 4.

2. Composition de revêtement selon la revendication 1, où la composition de revêtement est essentiellement exempte de polymère organique.

3. Composition de revêtement selon la revendication 1 ou la revendication 2, dans laquelle l'argile est une smectite, une hectorite ou une montmorillonite.

4. Composition de revêtement selon l'une quelconque des revendications 1 à 3, dans laquelle les particules d'argile ont une taille moyenne de particule dans la dimension de plus grande longueur dans une plage allant de 20 nm à 50 nm.

5. Composition selon l'une quelconque des revendications 1 à 3, dans laquelle les particules d'argile ont une taille moyenne de particule dans la dimension de plus grande longueur dans une plage allant de 100 nm à 1000 nm.

6. Composition de revêtement selon l'une quelconque des revendications 1 à 5, dans laquelle les particules de silice ont une taille moyenne de particule dans la dimension de plus grande longueur allant jusqu'à 25 nm.

7. Composition de revêtement selon l'une quelconque des revendications 1 à 6, dans laquelle la composition de revêtement comprend en outre un tensioactif.

8. Composition de revêtement selon l'une quelconque des revendications 1 à 7, dans laquelle la quantité totale de matières solides dans la composition de revêtement est dans une plage de 1 pour cent en poids à 40 pour cent en poids d'un poids total de la composition de revêtement.

9. Procédé de fourniture d'un revêtement sur un substrat, le procédé comprenant :
a) la fourniture d'une composition de revêtement contenant essentiellement uniquement :
un milieu aqueux ;
des nanoparticules de silice dispersées dans le milieu aqueux, dans lequel les nanoparticules de silice ont une taille moyenne de particule dans une dimension de plus grande longueur allant jusqu'à 100 nm ; et
des particules d'argile dispersées en milieu aqueux, dans lequel les particules d'argile ont une taille de particule moyenne dans une dimension de plus grande longueur dans une plage allant de 20 nm à 1000 nm ;
dans lequel un rapport pondéral des particules d'argile par rapport aux nanoparticules de silice est dans une plage de 0,01 à 0,25, et où la composition de revêtement a un pH inférieur ou égal à 4 ;
b) la mise en contact de la composition de revêtement avec une surface d'un substrat ; et
c) le séchage au moins partiel de la composition de revêtement pour former une couche externe sur la surface du substrat, la couche externe comprenant un réseau de silice amorphe comprenant des nanoparticules de silice et des particules d'argile dispersées dans le réseau de silice amorphe.

10. Procédé selon la revendication 9, dans lequel la composition de revêtement est essentiellement exempte de polymère organique.

11. Procédé selon la revendication 9 ou 10, dans lequel la quantité totale de matières solides dans la composition de revêtement est dans une plage de 1 pour cent en poids à 50 pour cent en poids d'un poids total de la composition de revêtement.

12. Procédé selon l'une quelconque des revendications 9 à 11, dans lequel le substrat est un polymère de verre ou organique.

13. Procédé selon la revendication 12, dans lequel le substrat est sélectionné parmi l'un quelconque du polyéthylène téréphtalate, polycarbonate, poly(méthacrylate de méthyle), polyuréthane, polyéthylène, polypropylène, copolymères de polyéthylène et de polypropylène ou des mélanges de ceux-ci.

14. Procédé selon l'une quelconque des revendications 9 à 13, dans lequel la couche externe permet la transmission de la lumière.

15. Procédé selon l'une quelconque des revendications 9 à 14, dans lequel la couche externe a une épaisseur dans la plage allant de 0,01 micromètre à 3 micromètres.

16. Procédé selon l'une quelconque des revendications 9 à 15, dans lequel la couche externe a une résistivité superficielle moyenne inférieure ou égale à 10⁹ ohms par carré à 25 °C et à 50 pour cent d'humidité relative.
